# FASCICULE DE BREVET EUROPEEN

(11) **EP 3 575 070 B1**
(45) Date de publication et mention de la délivrance du brevet: **06.05.2020**
(21) Numéro de dépôt: 19173647.9
(22) Date de dépôt: 09.05.2019
(51) Int. Cl.: B29C 70/44, B29C 70/20, B29B 11/12, B29C 51/14, B29K 303/00, B29L 31/30, B29K 33/00, B29K 63/00, B29K 67/00, B29L 31/00

(54) **OUTILLAGE DE FABRICATION D'UNE PRÉFORME TUBULAIRE DE FIBRES COMPRENANT UN DISPOSITIF DE COMPACTAGE**
VORRICHTUNG ZUR HERSTELLUNG VON ROHRFÖRMIGEN VORFORMLINGEN MIT FASERN MIT EINER VERDICHTUNGVORRICHTUNG
DEVICE FOR FABRICATING A TUBULAR PREFORM WITH FIBERS COMPRISING A COMPACTING DEVICE

(30) Priorité: 30.05.2018 FR 1854657
(43) Date de publication de la demande: 04.12.2019
(73) Titulaire: AIRBUS OPERATIONS (S.A.S.), 31060 Toulouse (FR)
(72) Inventeur: BROSSARD, Denis, 31060 TOULOUSE Cedex 9 (FR); BARBAUD, Jean-Claude, 31060 TOULOUSE Cedex 9 (FR); GOHIER, Sébastien, 31060 TOULOUSE Cedex 9 (FR); PERENNESSE, Gaël, 31060 TOULOUSE Cedex 9 (FR)
(74) Mandataire: Gicquel, Olivier Yves Gérard

(56) Documents cités:
- EP-A1- 2 397 312
- EP-A1- 3 296 091
- US-A- 2 999 780
- US-A- 3 377 657
- US-B1- 8 535 042

## Description

La présente demande se rapporte à un outillage de fabrication d'une préforme tubulaire de fibres comprenant un dispositif de compactage amélioré, cet outillage étant plus particulièrement adapté pour la fabrication d'une préforme d'une entrée d'air d'une nacelle d'aéronef.

Pour la présente demande, une surface tubulaire est une surface qui s'étend entre deux contours fermés espacés. A titre d'exemple, un cylindre de révolution ou non, un tronc de cône sont des surfaces tubulaires. Une préforme tubulaire de fibres est un volume de fibres délimité par une surface tubulaire intérieure, une surface tubulaire extérieure espacée de la première surface d'une distance sensiblement constante, les surfaces tubulaires intérieure et extérieure étant reliées au niveau de leurs contours par des premier et deuxième chants.

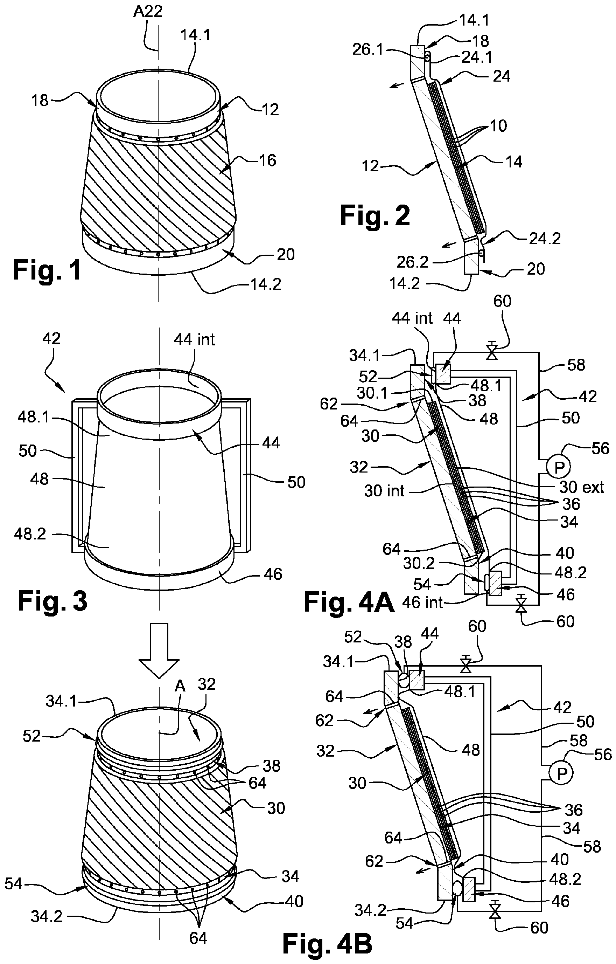

Selon un mode de réalisation illustré sur les figures 1 et 2, un panneau tubulaire, comme une entrée d'air d'une nacelle d'aéronef, est obtenu en empilant des nappes 10 de fibres pré-imprégnées sur un moule 12 qui présente une surface de dépose 14 tubulaire de manière à obtenir une préforme tubulaire 16 de fibres pré-imprégnées, puis en consolidant ladite préforme 16.

Selon un agencement, la surface de dépose 14 est délimitée par un bord supérieur 14.1, disposé dans un premier plan approximativement horizontal, et par un bord inférieur 14.2 disposé dans un deuxième plan approximativement horizontal. La surface de dépose 14 s'étend de part et d'autre de la préforme 16 et comprend une zone de contact supérieure 18, positionnée au-dessus de la préforme 16, et une zone de contact inférieure 20 positionnée au-dessous de la préforme 16.

Selon cet agencement, les nappes sont empilées les unes sur les autres, autour d'un axe d'empilement A22 sensiblement vertical.

Pour réduire les risques de porosité du panneau tubulaire, les nappes sont compactées à plusieurs reprises lors de la réalisation de la préforme 16. Ainsi, après la dépose de trois à cinq nappes, une opération de compactage est opérée.

Selon un mode de réalisation visible sur la figure 2, chaque opération de compactage consiste à :
- recouvrir les nappes superposées d'une vessie 24 qui s'étend au-delà des nappes superposées et qui présente une portion supérieure 24.1, en regard de la zone de contact supérieure 18, et une portion inférieure 24.2 en regard de la zone de contact inférieure 20,
- positionner un premier joint périphérique 26.1, entre la portion supérieure 24.1 et la zone de contact supérieure 18, et un deuxième joint périphérique 26.2 entre la portion inférieure 24.2 et la zone de contact inférieure 20,
- extraire les gaz présents dans le volume délimité par la vessie 24, la surface de dépose 14 et les premier et deuxième joints périphériques 26.1, 26.2 de sorte que les nappes superposées soient comprimées entre la vessie 24 et la surface de dépose 14.

Selon ce mode de réalisation, la vessie 24 est totalement souple et à usage unique. Les premier et deuxième joints périphériques 26.1, 26.2 sont également à usage unique et indépendants de la vessie 24 et du moule 12.

Compte tenu de l'orientation des nappes de fibres qui sont sensiblement verticales, la mise en place de la vessie 24 et des premier et deuxième joints périphériques 26.1, 26.2 est chronophage et non aisée. Plusieurs opérations de compactage étant nécessaires pour réaliser une préforme, la durée globale des opérations de compactage impacte fortement la durée de réalisation de la préforme.

Les documents US 2 999 780 A et US 8 535 042 B1 présentent des outillages de fabrication de pièces composites.

Le document US 2 999 780 décrit un outillage de fabrication d'une pièce tubulaire de fibres, comprenant:un moule présentant une surface de dépose tubulaire sur laquelle sont superposées des nappes de fibres, ladite surface de dépose comportant des première et deuxième zones de contact de part et d'autre des nappes de fibres, un dispositif de compactage, le dispositif de compactage comprenant:une première bague configurée pour entourer le moule au droit de la première zone de contact et présentant une première face intérieure espacée de la première zone de contact, une deuxième bague configurée pour entourer le moule au droit de la deuxième zone de contact et présentant une deuxième face intérieure espacée de la deuxième zone de contact.

La présente invention vise à remédier à tout ou partie des inconvénients de l'art antérieur.

A cet effet, l'invention a pour objet un outillage de fabrication d'une préforme tubulaire de fibres, comprenant :
- un moule présentant une surface de dépose tubulaire sur laquelle sont superposées des nappes de fibres, ladite surface de dépose comportant des première et deuxième zones de contact de part et d'autre des nappes de fibres, et
- un dispositif de compactage,
- une première bague configurée pour entourer le moule au droit de la première zone de contact et présentant une première face intérieure espacée de la première zone de contact,
- une deuxième bague configurée pour entourer le moule au droit de la deuxième zone de contact et présentant une deuxième face intérieure espacée de la deuxième zone de contact.

Selon l'invention, le dispositif de compactage comprend :
- au moins un conduit souple étanche, élastique, configuré pour entourer le moule et présentant une première extrémité, reliée à la première bague, et une deuxième extrémité reliée à la deuxième bague,
- au moins un élément de liaison rigide reliant les première et deuxième bagues ;
et l'outillage comprend au moins un premier joint périphérique configuré pour assurer une étanchéité entre la première bague et la première zone de contact et au moins un deuxième joint périphérique configuré pour assurer une étanchéité entre la deuxième bague et la deuxième zone de contact.

Le dispositif de compactage de l'outillage permet de fortement réduire la durée de sa mise en place ce qui permet de réduire la durée des cycles de compactage et in fine le temps de réalisation de la préforme.

Selon une autre caractéristique, la première extrémité du conduit souple est reliée à la première bague de manière à ce que, en fonctionnement, le conduit souple recouvre le premier joint périphérique et soit interposé entre le premier joint périphérique et le moule ; la deuxième extrémité du conduit souple est reliée à la deuxième bague de manière à ce que, en fonctionnement, le conduit souple recouvre le deuxième joint périphérique et soit interposé entre le deuxième joint périphérique et le moule.

Selon une configuration, le conduit souple est en un matériau ayant une faible adhérence avec les nappes de fibres.

Selon une autre caractéristique, chacun des premier et deuxième joints périphériques est configuré pour occuper un premier état inactif, dans lequel le joint périphérique est aplati ou rétracté et n'assure pas l'étanchéité entre la première ou deuxième bague et la première ou deuxième zone de contact, et un deuxième état actif dans lequel le joint périphérique est gonflé ou expansé et assure l'étanchéité entre la premier ou deuxième bague et la première ou deuxième zone de contact.

Selon une configuration, chacun des premier et deuxième joints périphériques est un boudin gonflable et l'outillage comprend au moins une alimentation en gaz, des canalisations reliant l'alimentation en gaz aux premier et deuxième joints périphériques, et au moins un mécanisme de régulation pour déclencher le passage de l'état inactif à l'état actif ou vice versa.

Selon un mode de réalisation, les premier et deuxième joints périphériques sont respectivement reliés aux première et deuxième faces intérieures des première et deuxième bagues.

Selon une autre caractéristique, le dispositif de compactage est configuré pour occuper une position repos, dans laquelle il est écarté du moule et une position de recouvrement dans laquelle il coiffe le moule, les première et deuxième bagues étant respectivement positionnées au droit des première et deuxième zones de contact.

Selon un agencement, le dispositif de compactage est positionné au-dessus et à l'aplomb du moule dans la position repos.

Selon une configuration, l'outillage comprend un système de manutention pour déplacer le dispositif de compactage entre la position repos et la position de recouvrement.

Selon un mode de réalisation, le système de manutention est un système de levage.

D'autres caractéristiques et avantages ressortiront de la description de l'invention qui va suivre, description donnée à titre d'exemple uniquement, en regard des dessins annexés parmi lesquels :
- La figure 1 est une représentation schématique d'un moule sur lequel est réalisée une préforme de fibres pré-imprégnées,
- la figure 2 est une coupe partielle d'un moule sur lequel sont superposées des nappes de fibres recouvertes d'une vessie qui illustre un mode de réalisation de l'art antérieur,
- la figure 3 est une représentation schématique d'un outillage de fabrication d'une préforme de fibres qui illustre un mode de réalisation de l'invention,
- les figures 4A et 4B sont des coupes partielles d'un outillage de fabrication d'une préforme de fibres qui illustrent un mode de réalisation de l'invention, avant un compactage et lors d'un compactage de nappes de fibres,
- la figure 5 est une vue en perspective d'un dispositif de compactage qui illustre un mode de réalisation de l'invention, et
- la figure 6 est une coupe partielle d'un outillage de fabrication d'une préforme de fibres qui illustre un autre mode de réalisation.

Sur les figures 3, 4A, 4B et 6, on a représenté un outillage de fabrication d'une préforme 30 de fibres pré-imprégnées. Cette préforme 30 esttubulaire et présente une surface tubulaire intérieure 30int, une surface tubulaire extérieure 30ext et des premier et deuxième chants 30.1 et 30.2 reliant les surfaces tubulaires intérieure et extérieure 30int et 30ext.

Selon une application non limitative, cette préforme 30 correspond à un panneau d'une entrée d'air après consolidation.

L'outillage comprend un moule 32 tubulaire qui présente une surface de dépose 34 sur laquelle sont déposées des nappes 36 de fibres pré-imprégnées de résine. L'outillage pourrait être utilisé avec des nappes 36 de fibres sèches (non pré-imprégnées). La surface de dépose 34 est tubulaire et conformée en fonction de la préforme 30 à obtenir et plus particulièrement de sa surface tubulaire intérieure 30int.

la surface de dépose 34 s'étend entre des premier et deuxièmes bords 34.1 et 34.2. Selon une configuration, la surface de dépose 34 est positionnée autour d'un axe A sensiblement vertical et les premier et deuxième bords 34.1 et 34.2 sont disposés dans des plans approximativement horizontaux, le premier bord 34.1 étant positionné au-dessus du deuxième bord 34.2. La surface de dépose 34 s'étend de part et d'autre de la préforme 30 et comprend une première zone de contact 38 entre la préforme 30 et le premier bord 34.1 ainsi qu'une deuxième de contact 40 entre la préforme 30 et le deuxième bord 34.2.

L'outillage comprend également un dispositif de compactage 42 qui comporte :
- une première bague 44 configurée pour entourer le moule 32 au droit de la première zone de contact 38 et présentant une première face intérieure 44int espacée de la première zone de contact 38,
- une deuxième bague 46 configurée pour entourer le moule 32 au droit de la deuxième zone de contact 40 et présentant une deuxième face intérieure 46int espacée de la deuxième zone de contact 40, et
- au moins un conduit souple 48 étanche, configuré pour entourer le moule 32 et présentant une première extrémité 48.1, reliée à la première bague 44, et une deuxième extrémité 48.2 reliée à une deuxième bague 46.

Le dispositif de compactage 42 comprend au moins un élément de liaison rigide 50 reliant les première et deuxième bagues 44, 46 afin de conserver un positionnement constant entre les première et deuxième bague 44 et 46. Cette solution permet de positionner simultanément les première et deuxième bagues 44, 46 au droit des première et deuxième zones de contact 38, 40.

Selon une configuration, chaque élément rigide 50 est positionné à l'extérieur du conduit souple 48.

Selon un mode de réalisation, le dispositif de compactage 42 comprend plusieurs éléments rigides 50, par exemple six, répartis régulièrement sur la périphérie des première et deuxième bagues 44, 46.

A titre d'exemple, chaque élément rigide 50 est métallique ou en matériau composite.

Selon une configuration visible sur la figue 5, la première bague 44 ayant une section plus petite que celle de la deuxième bague 46, chaque élément rigide 50 se présente sous la forme d'une jambe en L, une première branche du L étant sensiblement horizontale et reliée à la première bague 44, une deuxième branche du L étant approximativement verticale ou faiblement inclinée et reliée à la deuxième bague 46. Bien entendu, l'invention n'est pas limitée à cette configuration et d'autres configurations sont envisageables.

Le conduit souple 48 est en un matériau ayant une faible adhérence avec les nappes 36 de fibres pré-imprégnées. Le conduit souple 48 est en un matériau élastique pour épouser les formes des nappes 36 superposées et de la surface de dépose 34 quel que soit le nombre de nappes 36 superposées.

Selon un mode de réalisation, le conduit souple 48 est en élastomère, comme par exemple en élastomère commercialisé sous la marque « Mosite ».

L'outillage comprend également :
- au moins un premier joint périphérique 52 configuré pour assurer une étanchéité entre la première bague 44 et la première zone de contact 38,
- au moins un deuxième joint périphérique 54 configuré pour assurer une étanchéité entre la deuxième bague 46 et la deuxième zone de contact 40.

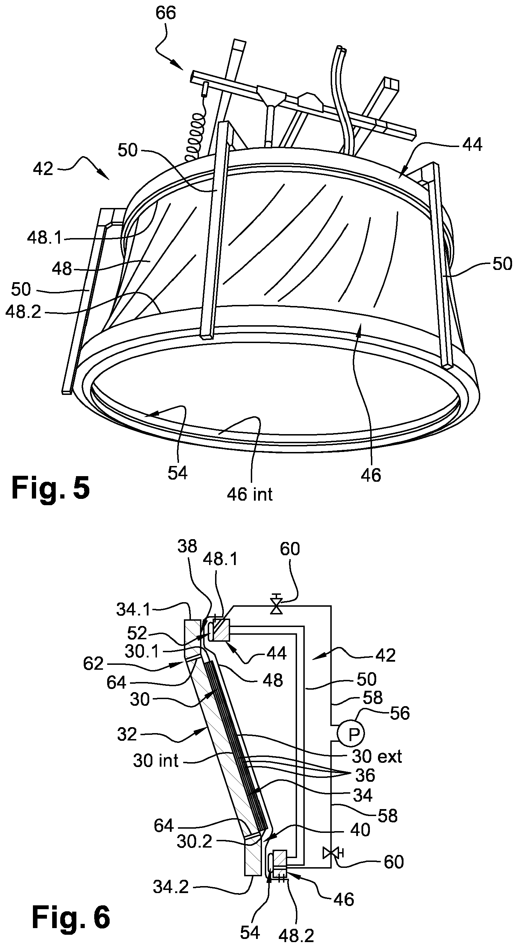

Selon une première variante illustrée par les figures 4A, 4B et 6, les premier et deuxième joints périphériques 52, 54 sont respectivement reliés aux première et deuxième faces intérieures 44int, 46int des première et deuxième bagues 44, 46. Selon une deuxième variante illustrée par la figure 3, les premier et deuxième joints périphériques 52, 54 sont respectivement reliés aux première et deuxième zones de contact 38,40.

Quelle que soit la variante, les premier et deuxième joints périphériques 52, 54 sont respectivement reliés aux première et deuxième faces intérieures 44int, 46int des première et deuxième bagues 44, 46 et/ou aux première et deuxième zones de contact 38,40.

Selon une première configuration visible sur les figures 4A et 4B, la première extrémité 48.1 du conduit souple 48 est reliée, de manière étanche, à la première bague 44 et la deuxième extrémité 48.2 du conduit souple 48 est reliée, de manière étanche, à la deuxième bague 46. Selon cette première configuration, le conduit souple 48 ne recouvre pas les premier et deuxième joints périphériques 52, 54 et n'est pas interposé entre lesdits joints périphériques et le moule 32.

Selon une deuxième configuration visible sur la figure 6, la première extrémité 48.1 du conduit souple 48 est reliée à la première bague 44 de manière à ce que, en fonctionnement, le conduit souple 48 recouvre le premier joint périphérique 52 et soit interposé entre le premier joint périphérique 52 et le moule 32, plus particulièrement la première zone de contact 38 du moule 32. En parallèle, la deuxième extrémité 48.2 du conduit souple 48 est reliée à la deuxième bague 46 de manière à ce que, en fonctionnement, le conduit souple 48 recouvre le deuxième joint périphérique 54 et soit interposé entre le deuxième joint périphérique 54 et le moule 32, plus particulièrement la deuxième zone de contact 40 du moule 32.

Selon cette deuxième configuration, en fonctionnement, les premier et deuxième joints périphériques 52, 54 plaquent le conduit souple 48 contre les première et deuxième zone de contact 38, 40 pour assurer l'étanchéité.

Selon un premier avantage, les jonctions entre les première et deuxième extrémités 48.1, 18.2 du conduit souple 48 et les première et deuxième bagues 44, 46 n'ont pas besoin d'être étanches, ce qui tend à simplifier la fixation du conduit souple 48 sur les première et deuxième bague 44, 46. Selon un autre avantage, cela permet d'augmenter la durée de vie du conduit souple 48, les jonctions entre les première et deuxième extrémités 48.1, 48.2 du conduit souple 48 et les première et deuxième bagues 44, 46 n'étant quasiment pas sollicitées lors de la mise sous vide car elles sont positionnées à l'extérieur des premier et deuxième joints périphériques 52, 54. Enfin, selon un autre avantage, les premier et deuxième joints périphériques 52, 54 sont protégés par le conduit souple 48 et ne sont pas reliés à ce dernier.

Les première et deuxième bagues 44 et 46 sont en matériau quasi inextensible pour permettre la compression des premier et deuxième joints périphériques 52, 54. A titre d'exemple, chacune des première et deuxième bagues 44, 46 est métallique ou en matériau composite.

Selon une autre caractéristique, chacun des premier et deuxième joints périphériques 52 et 54 est configuré pour occuper un premier état inactif, dans lequel le joint périphérique 52, 54 est aplati ou rétracté et assure une étanchéité entre la première (ou deuxième) bague 44 (ou 46) et la première (ou deuxième) zone de contact 38 (ou 40) et un deuxième état actif dans lequel le joint périphérique 52, 54 est gonflé ou expansé et assure une étanchéité entre la première (ou deuxième) bague 44 (ou 46) et la première (ou deuxième) zone de contact 38 (ou 40) en étant comprimé entre la première (ou deuxième) bague 44 (ou 46) et la première (ou deuxième) zone de contact 38 (ou 40).

Selon un mode de réalisation, chacun des premier et deuxième joints périphériques 52, 54 est un boudin gonflable et l'outillage comprend au moins une alimentation en gaz 56, notamment en air comprimé, des canalisations 58 reliant l'alimentation en gaz 56 aux premier et deuxième joints périphériques 52, 54, au moins un mécanisme de régulation 60 pour déclencher le passage de l'état inactif à l'état actif ou vice versa et des systèmes de sécurité comme des soupapes par exemple.

D'autres solutions peuvent être envisagées pour les joints périphériques 52, 54. Ainsi, ils pourraient être réalisés en un matériau configuré pour se rétracter ou s'expanser, en fonction de la température par exemple.

L'outillage comprend un système d'extraction des gaz 62 configuré pour extraire les gaz dans un volume, isolé par la surface de dépose 34 et le dispositif de compactage 42, et assurer une compression des nappes 36 de fibres pré-imprégnées. Selon un mode de réalisation, le système d'extraction des gaz 62 comprend au moins un conduit 64 débouchant au niveau de la surface de dépose 34 et relié à au moins une pompe de tirage au vide. Le système d'extraction des gaz 62 n'est pas plus décrit car il peut être identique à celui de l'art antérieur.

Le dispositif de compactage 42 est configuré pour occuper une position repos dans laquelle il est écarté du moule 32, la deuxième bague 46 étant positionnée au-dessus du premier bord 34.1 de la surface de dépose 34, et une position de recouvrement dans laquelle il coiffe le moule 32, les première et deuxième bagues 44, 46 étant respectivement positionnées au droit des première et deuxième zones de contact 38, 40.

Dans la position repos, le dispositif de compactage 42 est positionné à l'aplomb et au-dessus du moule 32.

Comme illustré par la figure 5, l'outillage comprend un système de manutention 66 pour déplacer le dispositif de compactage 42 entre la position repos et la position de recouvrement. Selon un mode de réalisation, visible sur la figure 5, le système de manutention 66 est un système de levage, comme un palan ou un pont roulant par exemple, fixé à une structure fixe positionnée au-dessus du moule 32.

Selon une autre caractéristique, l'outillage comprend un système de guidage pour favoriser le positionnement du dispositif de compactage par rapport au moule 32 au moins à l'approche de la position de recouvrement.

Le principe de fonctionnement de l'outillage est le suivant :
Le dispositif de compactage étant dans la position repos, comme illustré sur la figure 3, des nappes 36 de fibres pré-imprégnées sont superposées sur la surface de dépose 34. A partir d'un nombre déterminé de nappes 36 superposées, ces dernières doivent être compactées.

Pour chaque opération de compactage, les premier et deuxième joints périphériques 52, 54 étant à l'état inactif, le dispositif de compactage 42 est déplacé jusqu'à la position de recouvrement, comme illustré sur la figure 4A. En suivant, les premier et deuxième joints périphériques 52, 54 sont alimentés en air comprimé pour provoquer leur passage à l'état actif de manière à assurer une étanchéité entre la première bague 44 et la première zone de contact 38 et entre la deuxième bague 46 et la deuxième zone de contact 40, comme illustré sur la figure 4B.

Le système d'extraction des gaz 62 est activé pour provoquer la compression des nappes 36 entre le conduit souple 48 et la surface de dépose 34, comme illustré sur la figure 4B.

Lorsque les nappes 36 ont été compactées pendant une durée prédéfinie, le système d'extraction de gaz 62 est désactivé et le volume délimité par la surface de dépose 34 et le dispositif de compactage 42 est remis à la pression atmosphérique, puis les premier et deuxième joints périphériques 52, 54 ne sont plus alimentés en gaz comprimé et reviennent à l'état inactif.

Le dispositif de compactage 42 est alors déplacé dans la position repos et un nouveau cycle de dépose de nappes 36 peut être réalisé.

Le dispositif de compactage 42 permet de fortement réduire la durée de sa mise en place ce qui permet de réduire la durée des cycles de compactage et in fine le temps de réalisation de la préforme.

Il est d'usage simple et pratique.

Enfin, le conduit souple 58 peut être réutilisé, permettant ainsi de réduire les déchets générés par l'usage de vessies à usage unique.

## Revendications

1. Outillage de fabrication d'une préforme tubulaire de fibres, comprenant :
∘ un moule (32) présentant une surface de dépose (34) tubulaire sur laquelle sont superposées des nappes de fibres (36), ladite surface de dépose (34) comportant des première et deuxième zones de contact (38, 40) de part et d'autre des nappes de fibres (36),
∘ un dispositif de compactage (42),
∘ une première bague (44) configurée pour entourer le moule (32) au droit de la première zone de contact (38) et présentant une première face intérieure (44int) espacée de la première zone de contact (38),
∘ une deuxième bague (46) configurée pour entourer le moule (32) au droit de la deuxième zone de contact (40) et présentant une deuxième face intérieure (46int) espacée de la deuxième zone de contact (40),
**caractérisé en ce que** le dispositif de compactage (42) comprend :
∘ au moins un conduit souple (48) étanche, élastique, configuré pour entourer le moule (32) et présentant une première extrémité (48.1), reliée à la première bague (44), et une deuxième extrémité (48.2) reliée à la deuxième bague (46),
∘ au moins un élément de liaison rigide (50) reliant les première et deuxième bagues (44, 46),
et **en ce que** l'outillage comprend au moins un premier joint périphérique (52) configuré pour assurer une étanchéité entre la première bague (44) et la première zone de contact (38) et au moins un deuxième joint périphérique (54) configuré pour assurer une étanchéité entre la deuxième bague (46) et la deuxième zone de contact (40).

2. Outillage de fabrication d'une préforme tubulaire de fibres selon la revendication 1, **caractérisé en ce que** la première extrémité (48.1) du conduit souple (48) est reliée à la première bague (44) de manière à ce que, en fonctionnement, le conduit souple (48) recouvre le premier joint périphérique (52) et soit interposé entre le premier joint périphérique (52) et le moule (32) et **en ce que**, en fonctionnement, la deuxième extrémité (48.2) du conduit souple (48) est reliée à la deuxième bague (46) de manière à ce que le conduit souple (48) recouvre le deuxième joint périphérique (54) et soit interposé entre le deuxième joint périphérique (54) et le moule (32).

3. Outillage de fabrication d'une préforme tubulaire de fibres selon la revendication 1 ou 2, **caractérisé en ce que** le conduit souple (48) est en un matériau ayant une faible adhérence avec les nappes de fibres (36).

4. Outillage de fabrication d'une préforme tubulaire de fibres selon l'une des revendications précédentes, **caractérisé en ce que** chacun des premier et deuxième joints périphériques (52, 54) est configuré pour occuper un premier état inactif, dans lequel le joint périphérique (52, 54) est aplati ou rétracté et n'assure pas l'étanchéité entre la premier ou deuxième bague (44, 46) et la première ou deuxième zone de contact (38, 40), et un deuxième état actif dans lequel le joint périphérique (52, 54) est gonflé ou expansé et assure l'étanchéité entre la premier ou deuxième bague (44, 46) et la première ou deuxième zone de contact (38, 40).

5. Outillage de fabrication d'une préforme tubulaire de fibres selon la revendication précédente, **caractérisé en ce que** chacun des premier et deuxième joints périphériques (52, 54) est un boudin gonflable et en ce l'outillage comprend au moins une alimentation en gaz (56), des canalisations (58) reliant l'alimentation en gaz (56) aux premier et deuxième joints périphériques (52, 54), et au moins un mécanisme de régulation (60) pour déclencher le passage de l'état inactif à l'état actif ou vice versa.

6. Outillage de fabrication d'une préforme tubulaire de fibres selon l'une des revendications précédentes, **caractérisé en ce que** les premier et deuxième joints périphériques (52, 54) sont respectivement reliés aux première et deuxième faces intérieures (44int, 46int) des première et deuxième bagues (44, 46).

7. Outillage de fabrication d'une préforme tubulaire de fibres selon l'une des revendications précédentes, **caractérisé en ce que** le dispositif de compactage (42) est configuré pour occuper une position repos dans laquelle il est écarté du moule (32) et une position de recouvrement dans laquelle il coiffe le moule (32), les première et deuxième bagues (44, 46) étant respectivement positionnées au droit des première et deuxième zones de contact (38, 40).

8. Outillage de fabrication d'une préforme tubulaire de fibres selon la revendication précédente, **caractérisé en ce que** le dispositif de compactage (42) est positionné, dans la position repos, au-dessus et à l'aplomb du moule.

9. Outillage de fabrication d'une préforme tubulaire de fibres selon la revendication 7 ou 8, **caractérisé en ce que** l'outillage comprend un système de manutention (66) pour déplacer le dispositif de compactage (42) entre la position repos et la position de recouvrement.

10. Outillage de fabrication d'une préforme tubulaire de fibres selon les revendications 8 et 9, **caractérisé en ce que** le système de manutention est un système de levage.

## Patentansprüche

1. Vorrichtung zur Herstellung eines rohrförmigen Vorformlings aus Fasern, umfassend:
∘ ein Formwerkzeug (32), das eine rohrförmige Ablagefläche (34) aufweist, auf der Faserlagen (36) übereinandergelegt werden, wobei die Ablagefläche (34) erste und zweite Kontaktbereiche (38, 40) beidseits der Faserlagen (36) beinhaltet,
∘ eine Verdichtungseinrichtung (42),
∘ einen ersten Ring (44), der dazu ausgestaltet ist, das Formwerkzeug (32) auf Höhe des ersten Kontaktbereichs (38) zu umgeben, und eine erste Innenseite (44int) aufweist, die von dem ersten Kontaktbereich (38) beabstandet ist,
∘ einen zweiten Ring (46), der dazu ausgestaltet ist, das Formwerkzeug (32) auf Höhe des zweiten Kontaktbereichs (40) zu umgeben, und eine zweite Innenseite (46int) aufweist, die von dem zweiten Kontaktbereich (40) beabstandet ist,
**dadurch gekennzeichnet, dass** die Verdichtungseinrichtung (42) umfasst:
∘ mindestens einen dichten elastischen Schlauch (48), der dazu ausgestaltet ist, das Formwerkzeug (32) zu umgeben, und ein erstes Ende (48.1), das mit dem ersten Ring (44) verbunden ist, und ein zweites Ende (48.2), das mit dem zweiten Ring (46) verbunden ist, aufweist,
o mindestens ein starres Verbindungselement (50), das den ersten und den zweiten Ring (44, 46) verbindet,
und dadurch, dass die Vorrichtung mindestens eine erste Umfangsdichtung (52), die dazu ausgestaltet ist, eine Dichtigkeit zwischen dem ersten Ring (44) und dem ersten Kontaktbereich (38) zu gewährleisten, und mindestens eine zweite Umfangsdichtung (54), die dazu ausgestaltet ist, eine Dichtigkeit zwischen dem zweiten Ring (46) und dem zweiten Kontaktbereich (40) zu gewährleisten, umfasst.

2. Vorrichtung zur Herstellung eines rohrförmigen Vorformlings aus Fasern nach Anspruch 1, **dadurch gekennzeichnet, dass** das erste Ende (48.1) des Schlauchs (48) mit dem ersten Ring (44) derart verbunden ist, dass der Schlauch (48) im Betrieb die erste Umfangsdichtung (52) abdeckt und zwischen der ersten Umfangsdichtung (52) und dem Formwerkzeug (32) angeordnet ist, und dass das zweite Ende (48.2) des Schlauchs (48) im Betrieb mit dem zweiten Ring (46) derart verbunden ist, dass der Schlauch (48) die zweite Umfangsdichtung (54) abdeckt und zwischen der zweiten Umfangsdichtung (54) und dem Formwerkzeug (32) angeordnet ist.

3. Vorrichtung zur Herstellung eines rohrförmigen Vorformlings aus Fasern nach Anspruch 1 oder 2, **dadurch gekennzeichnet, dass** der Schlauch (48) aus einem Material ist, das eine geringe Haftung an den Faserlagen (36) besitzt.

4. Vorrichtung zur Herstellung eines rohrförmigen Vorformlings aus Fasern nach einem der vorhergehenden Ansprüche, **dadurch gekennzeichnet, dass** jede der ersten und zweiten Umfangsdichtungen (52, 54) dazu ausgestaltet ist, einen ersten inaktiven Zustand, in dem die Umfangsdichtung (52, 54) flachgedrückt oder eingezogen ist und die Dichtigkeit zwischen dem ersten oder zweiten Ring (44, 46) und dem ersten oder zweiten Kontaktbereich (38, 40) nicht gewährleistet, und einen zweiten aktiven Zustand, in dem die Umfangsdichtung (52, 54) aufgeblasen oder gedehnt ist und die Dichtigkeit zwischen dem ersten oder zweiten Ring (44, 46) und dem ersten oder zweiten Kontaktbereich (38, 40) gewährleistet, einzunehmen.

5. Vorrichtung zur Herstellung eines rohrförmigen Vorformlings aus Fasern nach dem vorhergehenden Anspruch, **dadurch gekennzeichnet, dass** jede der ersten und zweiten Umfangsdichtungen (52, 54) eine aufblasbare Wulst ist und dass die Vorrichtung mindestens eine Gasversorgung (56), Leitungen (58), welche die Gasversorgung (56) mit der ersten und der zweiten Umfangsdichtung (52, 54) verbinden, und mindestens einen Regulierungsmechanismus (60) zum Auslösen des Wechsels vom inaktiven Zustand in den aktiven Zustand oder umgekehrt umfasst.

6. Vorrichtung zur Herstellung eines rohrförmigen Vorformlings aus Fasern nach einem der vorhergehenden Ansprüche, **dadurch gekennzeichnet, dass** die erste und die zweite Umfangsdichtung (52, 54) mit der ersten beziehungsweise der zweiten Innenseite (44int, 46int) des ersten beziehungsweise des zweiten Rings (44, 46) verbunden sind.

7. Vorrichtung zur Herstellung eines rohrförmigen Vorformlings aus Fasern nach einem der vorhergehenden Ansprüche, **dadurch gekennzeichnet, dass** die Verdichtungseinrichtung (42) dazu ausgestaltet ist, eine Ruhestellung, in der sie vom Formwerkzeug (32) beabstandet ist, und eine Abdeckstellung, in der sie das Formwerkzeug (32) überdeckt, einzunehmen, wobei der erste und der zweite Ring (44, 46) auf Höhe des ersten beziehungsweise des zweiten Kontaktbereichs (38, 40) angeordnet sind.

8. Vorrichtung zur Herstellung eines rohrförmigen Vorformlings aus Fasern nach dem vorhergehenden Anspruch, **dadurch gekennzeichnet, dass** die Verdichtungseinrichtung (42) in der Ruhestellung vertikal und über dem Formwerkzeug angeordnet ist.

9. Vorrichtung zur Herstellung eines rohrförmigen Vorformlings aus Fasern nach Anspruch 7 oder 8, **dadurch gekennzeichnet, dass** die Vorrichtung ein Fördersystem (66) zum Verlagern der Verdichtungseinrichtung (42) zwischen der Ruhestellung und der Abdeckstellung umfasst.

10. Werkzeug zur Herstellung eines rohrförmigen Vorformlings aus Fasern nach den Ansprüchen 8 und 9, **dadurch gekennzeichnet, dass** das Fördersystem ein Hebesystem ist.

## Claims

1. Device for fabricating a tubular preform with fibres, comprising:
∘ a mould (32) having a tubular deposition surface (34) on which fibre webs (36) are superposed, said deposition surface (34) comprising first and second contact zones (38, 40) on either side of the fibre webs (36),
∘ a compacting device (42),
∘ a first ring (44) configured such as to surround the mould (32) in line with the first contact zone (38) and having a first interior face (44int) spaced from the first contact zone (38),
∘ a second ring (46) configured such as to surround the mould (32) in line with the second contact zone (40) and having a second interior face (46int) spaced from the second contact zone (40) ,
**characterized in that** the compacting device (42) comprises:
∘ at least one elastic leaktight flexible conduit (48), configured such as to surround the mould (32) and having a first end (48.1), connected to the first ring (44), and a second end (48.2) connected to the second ring (46),
∘ at least one rigid linking element (50) connecting the first and second rings (44, 46),
and **in that** the device comprises at least a first peripheral seal (52) configured such as to provide a seal between the first ring (44) and the first contact zone (38) and at least a second peripheral seal (54) configured such as to provide a seal between the second ring (46) and the second contact zone (40).

2. Device for fabricating a tubular preform with fibres according to Claim 1, **characterized in that** the first end (48.1) of the flexible conduit (48) is connected to the first ring (44) in such a manner that, during operation, the flexible conduit (48) covers the first peripheral seal (52) and is interposed between the first peripheral seal (52) and the mould (32), and **in that**, during operation, the second end (48.2) of the flexible conduit (48) is connected to the second ring (46) in such a manner that the flexible conduit (48) covers the second peripheral seal (54) and is interposed between the second peripheral seal (54) and the mould (32).

3. Device for fabricating a tubular preform with fibres according to Claim 1 or 2, **characterized in that** the flexible conduit (48) is made from a material having a low degree of adhesion to the fibre webs (36).

4. Device for fabricating a tubular preform with fibres according to one of the preceding claims, **characterized in that** each of the first and second peripheral seals (52, 54) is configured such as to occupy a first, inactive state, in which the peripheral seal (52, 54) is flattened or retracted and does not provide the seal between the first or second ring (44, 46) and the first or second contact zone (38, 40), and a second, active state, in which the peripheral seal (52, 54) is swollen or expanded and provides the seal between the first or second ring (44, 46) and the first or second contact zone (38, 40).

5. Device for fabricating a tubular preform with fibres according to the preceding claim, **characterized in that** each of the first and second peripheral seals (52, 54) is an inflatable bead, and **in that** the device comprises at least one gas supply (56), pipes (58) connecting the gas supply (56) to the first and second peripheral seals (52, 54), and at least one regulation mechanism (60) to trigger the passage from the inactive state to the active state, or vice versa.

6. Device for fabricating a tubular preform with fibres according to one of the preceding claims, **characterized in that** the first and second peripheral seals (52, 54) are, respectively, connected to the first and second interior faces (44int, 46int) of the first and second rings (44, 46) .

7. Device for fabricating a tubular preform with fibres according to one of the preceding claims, **characterized in that** the compacting device (42) is configured such as to occupy a rest position, in which it is remote from the mould (32), and a covering position, in which it caps the mould (32), the first and second rings (44, 46) being, respectively, positioned in line with the first and second contact zones (38, 40).

8. Device for fabricating a tubular preform with fibres according to the preceding claim, **characterized in that** the compacting device (42) is positioned, in the rest position, above and plumb with the mould.

9. Device for fabricating a tubular preform with fibres according to Claim 7 or 8, **characterized in that** the device comprises a handling system (66) for moving the compacting device (42) between the rest position and the covering position.

10. Device for fabricating a tubular preform with fibres according to Claims 8 and 9, **characterized in that** the handling system is a lifting system.
